# EUROPEAN PATENT SPECIFICATION

(11) **EP 3 215 295 B1**
(45) Date of publication and mention of the grant of the patent: **23.01.2019**
(21) Application number: 15781274.4
(22) Date of filing: 04.10.2015
(51) Int. Cl.: B23K 9/013, B23K 9/095, B23K 9/10, B23K 9/067, B23K 9/073

(54) **METHOD AND APPARATUS FOR AIR CARBON ARC CUTTING**
VERFAHREN UND VORRICHTUNG FÜR LUFT-KOHLENSTOFF-LICHTBOGENSCHNEIDEN
PROCEDE ET APPAREIL POUR COUPAGE A L'ARC AVEC ELECTRODE DE CARBONE

(30) Priority: 07.11.2014 US 201414536140
(43) Date of publication of application: 13.09.2017
(73) Proprietor: Illinois Tool Works Inc., Glenview, IL 60025 (US)
(72) Inventor: SCHARTNER, Quinn W., Glenview, Illinois 60025 (US); VOGEL, Bernard J., Glenview, Illinois 60025 (US); NELSON, Andrew D., Glenview, Illinois 60025 (US)
(74) Representative: Trinks, Ole
(86) International application number: PCT/US2015/053908
(87) International publication number: WO 2016/073097

(56) References cited:
- JP-A- S55 147 478
- US-A- 4 492 841
- US-A1- 2002 190 044
- US-A1- 2014 312 022

## Description

### FIELD OF THE INVENTION

The present disclosure relates generally to the art of welding type power supplies and providing welding type power. More specifically, it relates to a method of air carbon arc cutting and to a welding-type power supply according to the preamble of claims 1 and 10 respectively (see, for example, US-2002-0190044-A1).

### BACKGROUND OF THE INVENTION

There are many known types of welding-type power supplies. Welding-type power, as used herein, refers to power suitable for electric arc welding, plasma arc cutting or induction heating. Welding type system, as used herein, is a system that can provide welding type power, and can include control and power circuitry, wire feeders, and ancillary equipment. Welding-type power supply, as used herein, is a power supply that can provide welding type power.

Providing welding-type power, and designing systems to provide welding type power, provides unique challenges. Welding type systems will often be moved from one location to another, and be used with different inputs, such as single or three phase, or 115V, 230V, 460V, 575V, etc., or 50hz or 60hz signals. Power supplies that are designed for a single input cannot provide a consistent output across different input voltages, and components in these power supplies that operate safely at a particular input level can be damaged when operating at an alternative input level. Also, power supplies for most fields are designed for relatively steady loads. Welding, on the other hand, is a very dynamic process and numerous variables affect output current and load, such as arc length, electrode type, shield type, air currents, dirt on the work piece, puddle size, weld orientation, operator technique, and lastly the type of welding process determined to be most suitable for the application. These variables constantly change, and lead to a constantly changing and unpredictable output current and voltage. Power supplies for many fields are designed for low-power outputs. Welding-type power supplies are high power and present many problems, such as switching losses, line losses, heat damage, inductive losses, and the creation of electromagnetic interference. Accordingly, welding-type power supply designers face many unique challenges.

Additionally, welding-type power supplies or systems are often sold for one or more particular processes, such as stick, TIG, MIG, pulse, sub-arc, heating, cutting, and the maximum output power or current can be anywhere from one hundred or less amps, to five hundred or more. Some welding processes are performed using a cc output (controlled current), and others using a CV output (controlled voltage). Welding type power supplies dedicated to a single process and a single output are easier to design. However, many users prefer welding type power supplies that are multi-process so as to avoid having one power supply for each process.

There are many different topologies used in welding type power supplies. Switched power supplies are often used to allow for output control. One prior art welding type power supply that is useful for a variety pf processes is described in patent application US-2014-0021180-A1. This power supply is well suited for controlling the output using pulse width modulation of the output inverters. It includes a preregulator, a high voltage split bus, and a stacked inverter output. Another prior art welding type power supply well suited for pwm control of the output is described in patent US8455794-B.

One welding type process performed is CAC-A (air carbon arc cutting). CAC-A involves using a carbon-graphite electrode, and the arc between the electrode and the workpiece melts a portion of the metal, while a jet of air is passed through the arc to blow away the molten metal. The process is used for cutting and gouging, and it can be done manually or mechanized. CAC-A is performed on prior art welding power supplies using a stick mode, or a CV mode. Prior art welding type power supplies do not include a CAC-A mode. CAC-A mode, as used herein refers to a mode of a welding-type power supply that is dedicated to CAC-A (air carbon arc cutting), and includes a control scheme used for CAC-A.

Because prior art welding type power supplies do not have a CAC-A mode, the control and output power are not designed for CAC-A, and the process can be difficult. There are different CAC-A techniques, including skimming along the surface to smooth the surface, pecking at the surface to remove small areas, and gauging large areas. Providing power for CAC-A can be troublesome, because pecking and skimming can include brief arc outages. CAC-A starts can be particularly difficult when using a welding-type power supply because the start algorithm will be for another process (such as stick). Also, changes in current output will be tailored for another process (such as stick) rather than for CAC-A. Accordingly, a welding-type power supply that includes a CAC-A mode is desired. Preferably, it will include a start algorithm that is suitable for CAC-A.

### SUMMARY OF THE PRESENT INVENTION

According to the present invention, a method of air carbon arc cutting using a welding-type power supply is defined in claim 1. According to the present invention, a welding-type power supply is defined in claim 10.

According to the present invention, the stick droop in the output is disabled when in the CAC-A mode.

A CAC-A dig slope that is greater than a stick dig slope and a CAC-A dig threshold that is greater than a stick dig threshold are set, and output is provided at the dig slope when the output voltage is less than the dig threshold. in various embodiments.

The CAC-A dig slope is about 30 amps/volt and the CAC-A dig threshold is about 25 volts in one alternative.

The CAC-A hot start current is greater than a stick hot start current, a CAC-A hot start time and a CAC-A hot start delay time are set, and when an open circuit is detected and current is not detected within the hot start delay time, a hot start current is provided for the CAC-A hot start time in another alternative.

The CAC-A dig slope is at least 24 amps/volt, the CAC-A dig threshold is at least 23 volts, the CAC-A hot start current is about twice the current set point, the CAC-A hot start time is about 100msec, the CAC-A hot start delay time is at least 150 msec, the CAC-A start current is at least 10% is greater than the current set point, the CAC-A start current time is about 10 msec and the CAC-A slew rate is about 125 amps/msec in one alternative.

The CAC-A hot start current is about twice the current set point, the CAC-A hot start time is about 100msec, and the CAC-A hot start delay time is about 200 msec in one embodiment.

When an open circuit is detected and current is not detected within the hot start delay time, and the output voltage is less than the CAC-A dig threshold, the CAC-A hot start time is increased in various embodiments.

The CAC-A start current is about 12.5% greater than the current set point and the CAC-A start current time is about 10 msec, and the CAC-A slew rate is about 125 amps/msec or 200 amps/msec in various alternatives.

When an open circuit is detected and current is detected within the hot start delay time, a CAC-A start current is provided for a CAC-A start current time, and then the current is increased at a CAC-A slew rate until the current is provided at the current setpoint in another alternative.

The CAC-A control module includes a CAC-A start module in one embodiment.

The CAC-A control module includes a CAC-A dig module having a dig threshold that is greater than a stick dig threshold, and having a dig slope in various embodiments.

The CAC-A start module includes a CAC-A hot start current that is greater than a stick hot start current, a CAC-A hot start time, a CAC-A hot start delay time, responsive to the feedback input in another embodiment.

The CAC-A start module includes a CAC-A increased hot start module, responsive to the output voltage being less than a CAC-A dig threshold. in one embodiment.

The CAC-A start module includes a weld start module having a CAC-A start current time and a CAC-A slew rate, and is responsive to the feedback input in various embodiments.

The CAC-A control module includes according to the present invention, a droop disable module.

Other principal features and advantages of will become apparent to those skilled in the art upon review of the following drawings, the detailed description and the appended claims.

### BRIEF DESCRIPTION OF THE DRAWINGS

Figure 1 is block diagram of a welding-type power supply; and
Figure 2 is a controller used for the welding-type power supply of Figure 1.

### DETAILED DESCRIPTION OF THE PREFERRED EMBODIMENTS

While the present disclosure will be illustrated with reference to a particular welding-type power supply, power circuit, controller and control modules, it should be understood at the outset that other welding-type power supplies, power circuits, controllers and control modules can also be used to implement the invention.

Generally, a welding-type power supply includes a mode of operation specifically designed for CAC-A, in which CAC-A power is provided. The arc starting and the closed loop control is particularly well suited for CAC-A. A user mode selector, such as on the front panel of the welding-type power supply, allows the user to specify that the output should be for CAC-A. The preferred embodiment provides that other modes include stick, TIG, MIG, and that CC or CV can be provided.

The present invention provides that, when in the CAC-A mode the droop usually provided for a stick mode is disabled. This allows the VA curve in CAC-A mode to extend to the full capacity of the unit, instead of drooping as the voltage rises above 30V. The drooping characteristic reduces the available power, which is typically not beneficial for CAC-A.

The CAC-A mode, in the preferred embodiment, also has a CAC-A dig threshold that is about 23 to about 25 volts - which is greater than the typical 18.5V stick dig threshold. The CAC-A dig slope is about 24 to 30amps/volt, which is greater than the typical 8 amps/volt stick dig slope). This improves short circuit clearing, particularly with long weld cables. Alternatives provide for using other CAC-A dig thresholds and other CAC-A dig slopes, although it is preferred they be greater than the stick values. CAC-A dig slope, as used herein is the slope of the dig V-A curve when in a CAC-A mode. CAC-A dig threshold, as used herein is the threshold below which a CAC-A dig V-A curve is used when in a CAC-A mode. About, when referring to a parameter as used herein, refers to +/- 10%. Stick dig slope, as used herein is the slope of the dig V-A curve when in a stick mode. Stick dig threshold, as used herein is the threshold below which a stick dig V-A curve is used when in a stick mode.

Restrike logic specifically for CAC-A is provided in the CAC-A mode, in the preferred embodiment. The dedicated restrike/start provides versatility on various CAC-A techniques (normal, skim, peck). Hot start works well to initialize an arc, but is more difficult to control for skimming. The preferred embodiment provides a combination of hot start and "light" hot start and a unique weld start state that is well suited for both skimming an pecking.

The preferred embodiment provides that a CAC-A hot start state includes an initial CAC-A hot start current that is about twice the stick hot start current. Other CAC-A hot start currents can be provided, including current closer to the stick hot start magnitude. The CAC-A hot start current is preferably greater than the stick hot start current. CAC-A hot start current, as used herein is the hot start current when in a CAC-A mode. Stick hot start current, as used herein is the hot start current when in a stick mode.

The CAC-A hot start current is provided for CAC-A hot start time. The preferred CAC-A hot start time is about 100msec, or up to about 150 msec in other embodiments. The CAC-A hot start time is extended if the output voltage is below the CAC-A dig threshold. CAC-A hot start time, as used herein is the time during which a hot start current is provided when in a CAC-A mode. Alternatives provide for not extending the CAC-A hot start time, and/or using a different CAC-A hot start time.

CAC-A restrikes are handled by a CAC-A restrike algorithm, in the preferred embodiment. If current is detected within a CAC-A delay time of an outage, the algorithm determines it is restrike and transitions to the CAC-A weld start state. If current (or an arc) is detected within the CAC-A hot start delay time, then the CAC-A hot start (described above) is provided. The CAC-A hot start delay time is at least 150 msec and preferably about 200msec. It is be more or less than 200 msec, in other embodiments. The time should be selected so that the welding-type power supply provides a hot start when needed, but not when restriking. CAC-A hot start delay time, as used herein is a delay time during which hot start current is not provided after an arc outage, when in a CAC-A mode.

A CAC-A start state is provided in the CAC-A mode in the preferred embodiment. The CAC-A start state includes providing a CAC-A start current after the hot start or when the hot start is omitted. The CAC-A start current is provided for a CAC-A start current time. The preferred embodiment has a CAC-A start current of about 1.125 times the set point and the CAC-A start current time is about 10msec in the preferred embodiment. If the output voltage is less than the CAC-A dig threshold the CAC-A start current is provide for an extended time, preferably until the voltage rises above the CAC-A dig threshold, or for a fixed period of time. Alternatives provide for using other CAC-A start currents, other CAC-A start current times, omitting the extended time, and/or using a different threshold. CAC-A start current, as used herein is the output current after the hot start or when the hot start is omitted, when in a CAC-A mode. CAC-A start current time, as used herein is time during which the CAC-A start current is provided.

When in the CAC-A mode, the output current slew rate is limited (relative to the stick slew rate) following the initial CAC-A hot start or CAC-A start state, in the preferred embodiment. The slew rate is preferably limited to about 125 amps/msec, or less than 200amps/msec in various embodiments. Alternative include providing other slew rates, including a slew rate typical of CV processes. CAC-A slew rate, as used herein is the rate at which output current increases at the start of normal operation (after the hot start, etc.) when in a CAC-A mode. Stick slew rate, as used herein is the rate at which output current increases at the start of normal operation (after the hot start., etc) when in a stick mode.

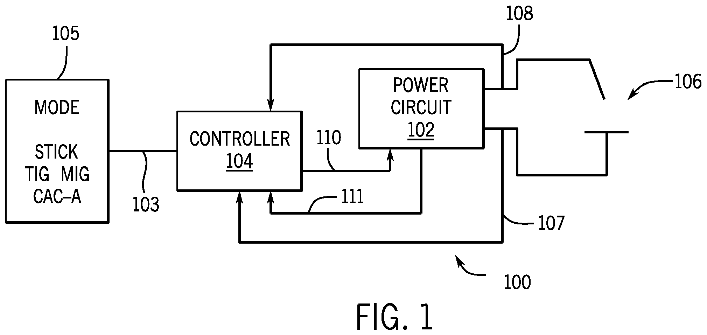

The above CAC-A mode is implemented, in the preferred embodiment, using digital PWM control of the output of a welding type power supply to provide a desirable output for CAC-A when in a CAC-A mode. A welding type power supply 100 (Figure 1) includes, in the preferred embodiment, a power circuit 102, a controller 104 and a mode selector 105. The output of power circuit 104 is a welding or CAC-A arc 106. Power supply 100 may be a multi-process welding type power supply, but the present invention will be explained with reference to a CAC-A mode of operation. Controller, as used herein, is digital or analog circuitry, software, and components that cooperate to control a welding type power supply. They may be in one location, or may be distributed over several locations.

Controller 104 is preferably a digital pulse width controller, such as that described in patent 8455794. Controller 104 may also be such as that described in US-2014-0021180-A1. Alternatives provide for an analog controller, a digital controller with discrete elements, a controller using DSPs, and a controller using other circuitry.

Power circuit 102 is preferably the power circuit shown in US-2014-0021180-A1, which includes a preregulator, a high voltage split bus, and, as an output converter, a stacked full bridge inverter output circuit. It may also be implemented using the power circuit shown in patent 8455794. Alternatives provide for using the output circuit (stacked inverters) without the preregulator, a half bridge output converter, or other output converters, such as a chopper, buck, etc., and using intermediates stages.

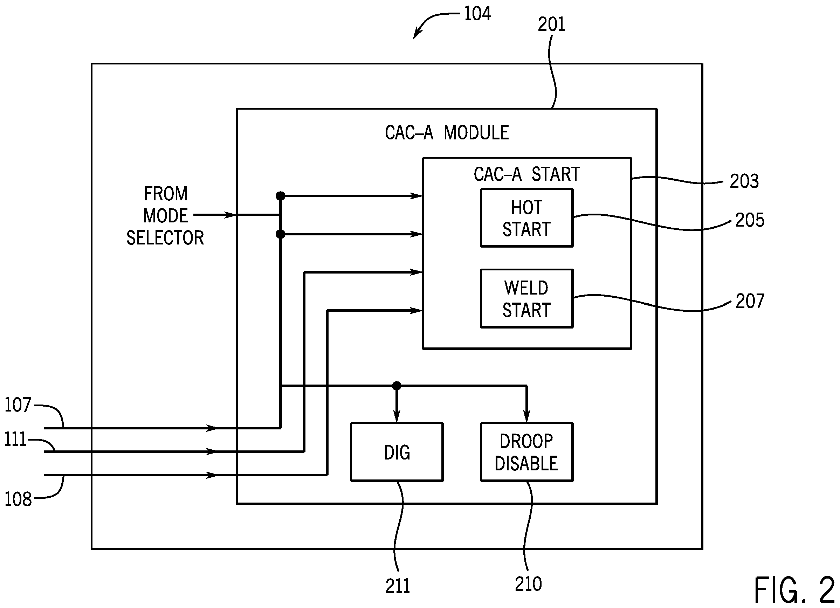

Controller 104 is responsive to mode selector 105, via line 103. When mode selector 105 selects the CAC-A mode, controller 105 implements a number of software modules (described below) that cause the output of welding-type power supply 100 to be particularly suited for CAC-A, as described above. Controller 104 is shown in more detail in Figure 2, and includes a CAC-A control module 201. Module, as used herein includes software and hardware that cooperate to perform a given function. CAC-A control module (or CAC-A module), as used herein is a control module that causes a welding-type power supply to provide an output that is dedicated to CAC-A. CAC-A control module 201 is implemented using software in the preferred, but is implemented using discrete components and/or hardware in other embodiments.

CAC-A control module 201 includes a CAC-A start module 203, a CAC-A dig module 211 and a droop disable module 210. CAC-A start module 203 includes an increased hot start module 205 and a weld start module 207. When the CAC-A mode is selected CAC-A start module 203 is activated and implements the scheme described above for CAC-A starts. Droop disable module 210 disables the droop usually provided for a stick mode. Also, CAC-A dig module 211 provides a CAC-A dig threshold of about 25 volts and a CAC-A dig slope of about 30amps/volt. When in the normal CAC-A mode of operation (after start and/or restrike) CAC-A control module 201 limits the output current slew rate, preferably to about 125 amps/msec, in response to feedback on feedback line 111. CAC-A dig module, as used herein is a control module that causes a welding-type power supply to provide a dig output below a dig threshold, when in a CAC-A mode. Droop disable module, as used herein is a control module used in CAC-A to disable the droop feature of a welding-type power supply.

CAC-A control module 201 uses CAC-A start module 203 to implement the start and restrike schemes above. CAC-A increased hot start module 205 monitors the output, using feedback lines 107, 108 and/or 111, after an outage. If current does not flow (or an arc is not detected) for a hot start delay time of about 200 msec, then the hot start mode is entered and CAC-A hot start module 205 causes a hot start current of about twice the stick hot start current to be provided. CAC-A hot start module 205 causes the CAC-A hot start current to be provided for the CAC-A hot start time, preferably about 100msec. The CAC-A hot start time is extended by CAC-A hot start module if the output voltage from feedback lines 107 and 108 is below the CAC-A dig threshold. After the CAC-A hot start current ends (100 msec, e.g.), CAC-A start module 207 takes over the process. Also, If CAC-A hot start module detects current flow with the 200 msec CAC-A hot start delay time, CAC-A start module 207 takes over the process. CAC-A start module, as used herein is a control module used when current flow is to be established and in CAC-A mode.

CAC-A start module causes the output current to be the CAC-A start current, preferably at least 10% and more preferably about 12.5% greater than the setpoint, for the CAC-A start current time, preferably about 10msec. If the output voltage on feedback lines 107 and 108 is less than the CAC-A dig threshold, then CAC-A start module 207 causes the CAC-A start current to be provided for an extended time, preferably until the voltage rises above the CAC-A dig threshold.

Numerous modifications may be made to the present disclosure which still fall within the intended scope hereof. Thus, it should be apparent that there has been provided a method and apparatus for providing welding-type power in a CAC-A mode that fully satisfies the objectives and advantages set forth above. Although the disclosure has been described specific embodiments thereof, it is evident that many alternatives, modifications and variations will be apparent to those skilled in the art. Accordingly, the invention is intended to embrace all such alternatives, modifications and variations that fall within the scope of the appended claims.

## Claims

1. A method of air carbon arc cutting (CAC-A) comprising the steps of:
providing a welding-type power supply to provide an output,
selecting a CAC-A mode by a user select means (105) among a plurality of modes comprising stick with stick droop, and
providing current in a CAC-A mode at a selected current setpoint,
**characterised by** further comprising disabling stick droop in the output for the selected CAC-A mode.

2. The method of claim 1,
further comprising setting a CAC-A dig slope that is greater than a stick dig slope and setting a CAC-A dig threshold that is greater than a stick dig threshold, and providing the output at the dig slope when the output voltage is less than the dig threshold.

3. The method of claim 2,
wherein setting the CAC-A dig slope includes setting the CAC-A dig slope to about 30 amps/volt and setting the CAC-A dig threshold includes setting the CAC-A dig threshold to about 25 volts.

4. The method of one of claims 1 to 3, further comprising:
- setting a CAC-A hot start current that is greater than a stick hot start current; setting a CAC-A hot start time;
- setting a CAC-A hot start delay time; and
- when an open circuit is detected and current is not detected within the hot start delay time providing a hot start current for the CAC-A hot start time.

5. The method of claim 4,
wherein setting the CAC-A hot start current includes setting the CAC-A hot start current to about twice the current set point, and setting the CAC-A hot start time includes setting the CAC-A hot start time to be about 100msec, and setting the CAC-A hot start delay time includes setting the CAC-A hot start delay time to be about 200 msec.

6. The method of claim 4,
further comprising when an open circuit is detected and current is not detected within the hot start delay time and the output voltage is less than the CAC-A dig threshold, increasing the CAC-A hot start time.

7. The method of claim 4,
further comprising when an open circuit is detected and then current is detected within the hot start delay time, a CAC-A start current is provided for a CAC-A start current time, and thereafter the current provided is increased at a CAC-A slew rate until the current is provided at the current setpoint.

8. The method of claim 7,
wherein setting the CAC-A start current includes setting the CAC-A start current to be about 12.5% greater than the current set point, and setting the CAC-A start current time includes setting the CAC-A start current time to be about 10 msec, and setting the CAC-A slew rate includes setting the CAC-A slew rate to be about 125 amps/msec.

9. The method of claim 7,
wherein setting the CAC-A start current includes setting the CAC-A start current to be about 12.5% greater than the current set point, and setting the CAC-A start current time includes setting the CAC-A start current time to be about 10 msec, and setting the CAC-A slew rate includes setting the CAC-A slew rate to be about 200 amps/msec.

10. A welding-type power supply for air carbon arc cutting (CAC- A), comprising:
- means (102) for providing welding-type power;
- user select means (105) for selecting a plurality of modes, including a stick with stick droop and a CAC- A mode; and
**characterised by**
- control means (104), for controlling the means (102) for providing welding-type power, wherein the control means (104) is responsive to the user select means (105),
wherein the control means (104) includes means for disabling stick droop in the output when the CAC-A mode is selected by the user select means (105).

11. The welding-type power supply of claim 10,
wherein the control means (104) includes means for setting a CAC-A dig slope that is greater than a stick dig slope and setting a CAC-A dig threshold that is greater than a stick dig threshold, and for providing the output at the dig slope when the output voltage is less than the dig threshold.

12. The welding-type power supply of claim 10 or 11,
wherein the control means (104) includes means for setting a CAC-A hot start current that is greater than a stick hot start current, for setting a CAC-A hot start time, for setting a CAC-A hot start delay time, and for providing a hot start current for the CAC-A hot start time when an open circuit is detected and current is not detected within the hot start delay time.

13. The welding-type power supply of claim 12,
wherein the control means includes means for increasing the CAC-A hot start time in response to an open circuit being detected and current not being detected within the hot start delay time and the output voltage being less than the CAC-A dig threshold.

14. The welding-type power supply of claim 12 or 13,
wherein the control means (104) includes means for a CAC-A start current is provided for a CAC-A start current time and thereafter the current provided is increased at a CAC-A slew rate until the current is provided at the current setpoint, when an open circuit is detected and then current is detected within the hot start delay time.

## Patentansprüche

1. Verfahren zum Luft-/Kohlenstoff-Lichtbogenschneiden (CAC-A), das die folgenden Schritte umfasst:
Bereitstellen einer Schweißsystemleistungsversorgung, um ein Ausgangssignal bereitzustellen, unter mehreren Modi, die Stab-mit-Stababsenkung umfassen, durch ein Anwenderauswahlmittel (105) einen CAC-A-Modus zu wählen und in einem CAC-A-Modus Strom auf einem gewählten Stromeinstellpunkt bereitzustellen,
**gekennzeichnet durch** Abschalten der Stababsenkung im Ausgangssignal für den gewählten CAC-A-Modus.

2. Verfahren nach Anspruch 1,
das ferner das Einstellen einer CAC-A-DIG-Flanke, die größer als eine Stab-DIG-Flanke ist, das Einstellen eines CAC-A-DIG-Schwellenwertes, der größer als ein Stab-DIG-Schwellenwert ist, und das Bereitstellen des Ausgangssignals bei der DIG-Flanke, wenn die Ausgangsspannung geringer als der DIG-Schwellenwert ist, umfasst.

3. Verfahren nach Anspruch 2, wobei
das Einstellen der CAC-A-DIG-Flanke das Einstellen der CAC-A-DIG-Flanke auf etwa 30 Ampere/Volt enthält und das Einstellen des CAC-A-DIG-Schwellenwertes das Einstellen des CAC-A-DIG-Schwellenwertes auf etwa 25 Volt enthält.

4. Verfahren nach einem der Ansprüche 1 bis 3, das ferner Folgendes umfasst:
- Einstellen eines CAC-A-Warmstartstromes, der größer als ein Stabwarmstartstrom ist; Einstellen einer CAC-A-Warmstartzeit;
- Einstellen einer CAC-A-Warmstartverzögerungszeit; und
- Bereitstellen eines Warmstartstromes während der CAC-A-Warmstartzeit, wenn ein Leerlauf detektiert wird und kein Strom in der CAC-A-Warmstartverzögerungszeit detektiert wird.

5. Verfahren nach Anspruch 4, wobei
das Einstellen des CAC-A-Warmstartstromes das Einstellen des CAC-A-Warmstartstromes auf etwa das Doppelte des Stromeinstellpunktes enthält, das Einstellen der CAC-A-Warmstartzeit das Einstellen der CAC-A-Warmstartzeit auf etwa 100 ms enthält und das Einstellen der CAC-A-Warmstartverzögerungszeit das Einstellen der CAC-A-Warmstartverzögerungszeit auf etwa 200 ms enthält.

6. Verfahren nach Anspruch 4,
das ferner umfasst, dass dann, wenn ein Leerlauf detektiert wird, kein Strom in der Warmstartverzögerungszeit detektiert wird und die Ausgangsspannung geringer als der CAC-A-DIG-Schwellenwert ist, das Erhöhen der CAC-A-Warmstartzeit.

7. Verfahren nach Anspruch 4,
das ferner umfasst, dass dann, wenn ein Leerlauf detektiert wird und dann ein Strom in der Warmstartverzögerungszeit detektiert wird, ein CAC-A-Startstrom während einer CAC-A-Startstromzeit bereitgestellt wird und danach der bereitgestellte Strom mit der CAC-A-Anstiegsgeschwindigkeit erhöht wird, bis der Strom auf dem Stromeinstellpunkt bereitgestellt wird.

8. Verfahren nach Anspruch 7, wobei
das Einstellen des CAC-A-Startstromes das Einstellen des CAC-A-Stromes derart, dass er etwa 12,5 % größer als der Stromeinstellpunkt ist, enthält, das Einstellen der CAC-A-Startstromzeit das Einstellen der CAC-A-Startstromzeit auf etwa 10 ms enthält und das Einstellen der CAC-A-Anstiegsgeschwindigkeit das Einstellen der CAC-A-Anstiegsgeschwindigkeit auf etwa 125 Ampere/ms enthält.

9. Verfahren nach Anspruch 7, wobei
das Einstellen des CAC-A-Startstromes das Einstellen des CAC-A-Stromes derart, dass er etwa 12,5 % größer als der Stromeinstellpunkt ist, enthält, das Einstellen der CAC-A-Startstromzeit das Einstellen der CAC-A-Startstromzeit auf etwa 10 ms enthält und das Einstellen der CAC-A-Anstiegsgeschwindigkeit das Einstellen der CAC-A-Anstiegsgeschwindigkeit auf etwa 200 Ampere/ms enthält.

10. Schweißsystemleistungsversorgung für Luft-/Kohlenstoff-Lichtbogenschneiden (CAC-A), die Folgendes enthält:
- ein Mittel (102) zum Bereitstellen einer Schweißsystemleistung; und
- ein Anwenderauswahlmittel (105) zum Wählen mehrerer Modi, die eine Stab-mit-Stababsenkungs-Modus und einen CAC-A-Modus umfassen;
**gekennzeichnet durch**
ein Steuermittel (104) zum Steuern des Mittels (102) zum Bereitstellen einer Schweißsystemleistung, wobei das Steuermittel (104) auf das Anwenderauswahlmittel (105) anspricht, wobei
das Steuermittel (104) ein Mittel enthält, um eine Stababsenkung im Ausgangssignal abzuschalten, wenn der CAC-A-Modus durch das Anwenderauswahlmittel (105) gewählt ist.

11. Schweißsystemleistungsversorgung nach Anspruch 10, wobei
das Steuermittel (104) ein Mittel zum Einstellen einer CAC-A-DIG-Flanke, die größer als eine Stab-DIG-Flanke ist, das Einstellen eines CAC-A-DIG-Schwellenwertes, der größer als ein Stab-DIG-Schwellenwert ist, und das Bereitstellen des Ausgangssignals bei der DIG-Flanke, wenn die Ausgangsspannung geringer als der DIG-Schwellenwert ist, enthält.

12. Schweißsystemleistungsversorgung nach Anspruch 10 oder 11, wobei
das Steuermittel (104) Mittel zum Einstellen eines CAC-A-Warmstartstromes, der größer als ein Stabwarmstartstrom ist, zum Einstellen einer CAC-A-Warmstartzeit, zum Einstellen einer CAC-A-Warmstartverzögerungszeit und zum Bereitstellen eines Warmstartstromes während der CAC-A-Warmstartzeit, wenn ein Leerlauf detektiert wird und kein Strom in der CAC-A-Warmstartverzögerungszeit detektiert wird, enthält.

13. Schweißsystemleistungsversorgung nach Anspruch 12, wobei
das Steuermittel (104) ein Mittel zum Erhöhen der CAC-A-Warmstartzeit als Antwort darauf enthält, dass ein Leerlauf detektiert wird, kein Strom in der Warmstartverzögerungszeit detektiert wird und die Ausgangsspannung geringer als der CAC-A-DIG-Schwellenwert ist.

14. Schweißsystemleistungsversorgung nach Anspruch 12 oder 13, wobei
das Steuermittel (104) ein Mittel enthält, um einen CAC-A-Startstrom während einer CAC-A-Startstromzeit bereitzustellen und danach den bereitgestellten Strom mit der CAC-A-Anstiegsgeschwindigkeit zu erhöhen, bis der Strom beim Stromeinstellpunkt bereitgestellt wird, wenn ein Leerlauf detektiert wird und dann ein Strom in der Warmstartverzögerungszeit detektiert wird.

## Revendications

1. Procédé de coupage à l'arc avec électrode de carbone (CAC-A), comprenant les étapes consistant à :
fournir une alimentation électrique de type soudage pour fournir une sortie, sélectionner un mode CAC-A avec un moyen de sélection par utilisateur (105) parmi une pluralité de modes comprenant la baguette avec affaissement de baguette, et fournir un courant dans un mode CAC-A à un point de consigne de courant sélectionné,
**caractérisé en ce qu'**il comprend également l'étape consistant à désactiver l'affaissement de baguette dans la sortie pour le mode CAC-A sélectionné.

2. Procédé selon la revendication 1,
comprenant également les étapes consistant à fixer une pente de pénétration CAC-A qui soit supérieure à une pente de pénétration de baguette et à fixer un seuil de pénétration CAC-A qui soit supérieur à un seuil de pénétration de baguette, puis fournir la sortie à la pente de pénétration lorsque la tension de sortie est inférieure au seuil de pénétration.

3. Procédé selon la revendication 2,
dans lequel l'étape de fixation de la pente de pénétration CAC-A consiste à fixer la pente de pénétration CAC-A à environ 30 A/V et l'étape de fixation du seuil de pénétration CAC-A consiste à fixer le seuil de pénétration CAC-A à environ 25 V.

4. Procédé selon l'une quelconque des revendications 1 à 3, comprenant également les étapes consistant à :
- fixer un courant de démarrage à chaud CAC-A qui soit supérieur à un courant de démarrage à chaud de baguette ; fixer un temps de démarrage à chaud CAC-A ;
- fixer un temps de retard de démarrage à chaud CAC-A ; et
- lorsqu'un circuit ouvert est détecté et qu'aucun courant n'est détecté au cours du temps de retard de démarrage à chaud, fournir un courant de démarrage à chaud pendant le temps de démarrage à chaud CAC-A.

5. Procédé selon la revendication 4,
dans lequel l'étape de fixation du courant de démarrage à chaud CAC-A consiste fixer le courant de démarrage à chaud CAC-A à une valeur égale à environ le double du point de consigne de courant, l'étape de fixation du temps de démarrage à chaud CAC-A consiste à fixer le temps de démarrage à chaud CAC-A à environ 100 ms, et l'étape de fixation du temps de retard de démarrage à chaud CAC-A consiste à fixer le temps de retard de démarrage à chaud CAC-A à environ 200 ms.

6. Procédé selon la revendication 4,
comprenant également l'étape consistant à, lorsqu'un circuit ouvert est détecté et qu'aucun courant n'est détecté au cours du temps de retard de démarrage à chaud, et que la tension de sortie est inférieure au seuil de pénétration CAC-A, augmenter le temps de démarrage à chaud CAC-A.

7. Procédé selon la revendication 4,
comprenant également l'étape consistant à, lorsqu'un circuit ouvert est détecté puis qu'un courant est détecté au cours du temps de retard de démarrage à chaud, fournir un courant de démarrage CAC-A pendant un temps de courant de démarrage CAC-A, puis augmenter le courant fourni à une vitesse de montée CAC-A jusqu'à ce que le courant fourni atteigne le point de consigne de courant.

8. Procédé selon la revendication 7,
dans lequel l'étape de fixation du courant de démarrage CAC-A consiste à fixer le courant de démarrage CAC-A à une valeur supérieure d'environ 12,5 % à celle du point de consigne de courant, l'étape de fixation du temps de courant de démarrage CAC-A consiste à fixer le temps de courant de démarrage CAC-A à environ 10 ms, et l'étape de fixation de la vitesse de montée CAC-A consiste à fixer la vitesse de montée CAC-A à environ 125 A/ms.

9. Procédé selon la revendication 7,
dans lequel l'étape de fixation du courant de démarrage CAC-A consiste à fixer le courant de démarrage CAC-A à une valeur supérieure d'environ 12,5 % à celle du point de consigne de courant, l'étape de fixation du temps de courant de démarrage CAC-A consiste à fixer le temps de courant de démarrage CAC-A à environ 10 ms, et l'étape de fixation de la vitesse de montée CAC-A consiste à fixer la vitesse de montée CAC-A à environ 200 A/ms.

10. Alimentation électrique de type soudage pour le coupage à l'arc avec électrode de carbone (CAC-A), comprenant :
- un moyen (102) pour fournir une alimentation de type soudage ;
- un moyen de sélection par utilisateur (105) servant à sélectionner une pluralité de modes, en particulier une baguette avec affaissement de baguette et un mode CAC-A ;
et **caractérisée par** :
un moyen de commande (104) servant à commander le moyen (102) pour fournir une alimentation de type soudage, le moyen de commande (104) répondant au moyen de sélection par utilisateur (105),
le moyen de commande (104) comprenant un moyen pour désactiver l'affaissement de baguette dans la sortie lorsque le mode CAC-A est sélectionné par le moyen de sélection par utilisateur (105).

11. Alimentation électrique de type soudage selon la revendication 10,
dans laquelle le moyen de commande (104) comprend un moyen pour fixer une pente de pénétration CAC-A qui soit supérieure à une pente de pénétration de baguette et fixer un seuil de pénétration CAC-A qui soit supérieur à un seuil de pénétration de baguette, et pour fournir la sortie à la pente de pénétration lorsque la tension de sortie est inférieure au seuil de pénétration.

12. Alimentation électrique de type soudage selon la revendication 10 ou 11,
dans laquelle le moyen de commande (104) comprend un moyen pour fixer un courant de démarrage à chaud CAC-A qui soit supérieur à un courant de démarrage à chaud de baguette, pour fixer un temps de démarrage à chaud CAC-A, pour fixer un temps de retard de démarrage à chaud CAC-A et pour fournir un courant de démarrage à chaud pendant le temps de démarrage à chaud CAC-A lorsqu'un circuit ouvert est détecté et qu'aucun courant n'est détecté au cours du temps de retard de démarrage à chaud.

13. Alimentation électrique de type soudage selon la revendication 12,
dans laquelle le moyen de commande (104) comprend un moyen pour augmenter le temps de démarrage à chaud CAC-A en réponse au fait qu'un circuit ouvert est détecté et qu'aucun courant n'est détecté au cours du temps de retard de démarrage à chaud, et au fait que la tension de sortie est inférieure au seuil de pénétration CAC-A.

14. Alimentation électrique de type soudage selon la revendication 12 ou 13,
dans laquelle le moyen de commande (104) comprend un moyen pour fournir un courant de démarrage CAC-A pendant un temps de courant de démarrage CAC-A, puis augmenter le courant fourni à une vitesse de montée CAC-A jusqu'à ce que le courant fourni atteigne le point de consigne de courant, lorsqu'un circuit ouvert est détecté puis qu'un courant est détecté au cours du temps de retard de démarrage à chaud.
